## Europäisches Patentamt
## European Patent Office
## Office européen des brevets

(11) Veröffentlichungsnummer: **0 243 749**
**B1**

(12) **EUROPÄISCHE PATENTSCHRIFT**

(45) Veröffentlichungstag der Patentschrift: **08.08.90**

(51) Int. Cl.⁵: **F 16 C 33/61**

(21) Anmeldenummer: **87105226.2**

(22) Anmeldetag: **08.04.87**

(54) Zweireihiges ringförmiges, als Profildrahtlager ausgebildetes Schrägwälzlager.

(30) Priorität: **28.04.86 DE 3614390**

(43) Veröffentlichungstag der Anmeldung:
**04.11.87 Patentblatt 87/45**

(45) Bekanntmachung des Hinweises auf die
Patenterteilung:
**08.08.90 Patentblatt 90/32**

(84) Benannte Vertragsstaaten:
**AT BE CH DE ES FR GB GR IT LI LU NL SE**

(56) Entgegenhaltungen:
**CH-A- 446 824**
**CH-A- 555 012**
**DE-U-8 437 820**
**DE-U-8 437 821**
**FR-A- 423 231**
**FR-A-2 268 983**
**GB-A-1 079 425**

(73) Patentinhaber: **Hoesch Aktiengesellschaft**
**Eberhardstrasse 12**
**D-4600 Dortmund 1 (DE)**

(72) Erfinder: **Jacob, Werner, Dipl.-Ing.**
**Briandring 29**
**D-6000 Frankfurt 70 (DE)**
Erfinder: **Götze, Horst F.**
**Stichtstrasse 9**
**D-7454 Bodelshausen (DE)**

Courier Press, Leamington Spa, England.

## Beschreibung

Die Erfindung bezieht sich auf ein zweireihiges ringförmiges, als Profildrahtlager ausgebildetes Schrägwälzlager, bestehend aus Innenring und Außenring und mindestens drei darin eingebettete, die Laufbahnen bildende Laufdrähte, zwischen denen Kugeln, Tonnenrollen und/oder Spindelrollen als Wälzkörper angeordnet sind.

Diese Lager sind bekanntlich besonders vielschichtigen Anforderungen unterworfen; sie dürfen kein großes Gewicht haben, was bei Lagerdurchmessern von mehreren Metern schon ein Problem darstellt. Da insbesondere bei gepanzerten Fahrzeugen die motorische und von Seiten des Fahrgestells her mögliche Fahrgeschwindigkeit durch die Panzerung von Fahrgestell und Drehturm erheblich beschränkt wird, muß nicht nur beim Drahtlager, sondern auch am Fahrgestell selbst und den anderen Fahrzeugteilen an Gewicht gespart werden.

Dies führt dazu, daß das Fahrgestell und Chassis dieser Fahrzeuge nicht so verwindungssteif sind, wie es eigentlich notwendig wäre. Diese geringere Steifigkeit des Fahrzeuges hat aber als Nebenwirkung den Vorteil, daß die Verbindungsstellen nicht so stark beansprucht werden wie bei starren Fahrgestellen.

Auf das Drahtlager wirkt sich diese geringere Verwindungsfestigkeit jedoch nachteilig aus, denn im Gelände verbiegt sich das Fahrzeug dreidimensional, der Turm folgt über das Lager mit einer gewissen Verzögerung, so daß im Lager Verspannungen auftreten, die erheblich sein können. Wird dann auch noch geschossen, kommen Kräfte auf das Lager hinzu, die ein Vielfaches der Auflast betragen.

Diese Beanspruchungen treten aber auch bei Lagern dieser Art auf, die bei stationären Aggregaten angewendet werden, wenn diese beispielsweise Vibrationen oder Lage- bzw. Lastveränderungen zum Horizont ausgesetzt werden.

Die Erfindung hat sich zur Aufgabe gestellt, bei dieser Art von Lagern das Verhältnis zwischen Lastgröße und -einwirkung einerseits und Gewicht und Bauvolumen des Lagers andererseits zu verbessern. Vor allem aber soll die Einwirkung der unkontrolliert auf das Lager einwirkenden Kräfte so weitgehend wie möglich vermindert, dem Lager selbst also ebenfalls eine größere Elastizität gegeben werden; ferner soll damit die Qualität der funktion des Lagers verbessert werden, so daß in auftretenden Extremfällen Lagerverspannungen nicht auftreten können.

Nach der Erfindung wird diese Aufgabe bei Profildrahtlagern der eingangs genannten Art dadurch gelöst, daß sich jeder Wälzkörper an wenigstens einem zugehörigen Laufdraht an zwei, mit dem Krümmungsmittelpunkt des Wälzkörpers oder der Laufbahn, einen Winkel einschließenden Punkten abwälzt, und daß jeder Wälzkörper auf der entgegengesetzten Seite ebenfalls in zwei Punkten abgestützt ist, so daß in allen Laufbahnen ein Verpunktlager vorhanden ist.

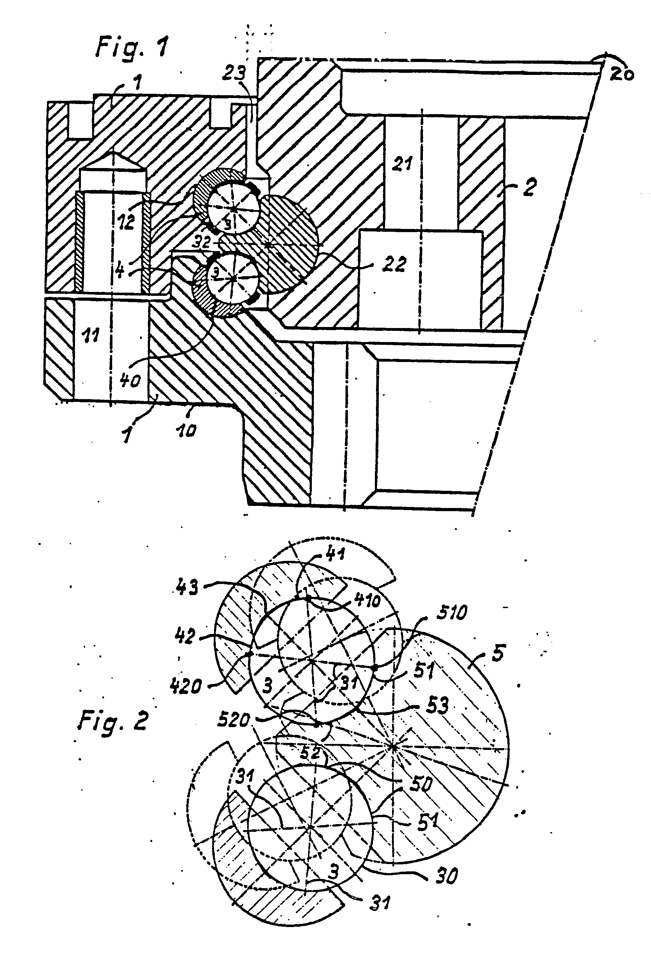

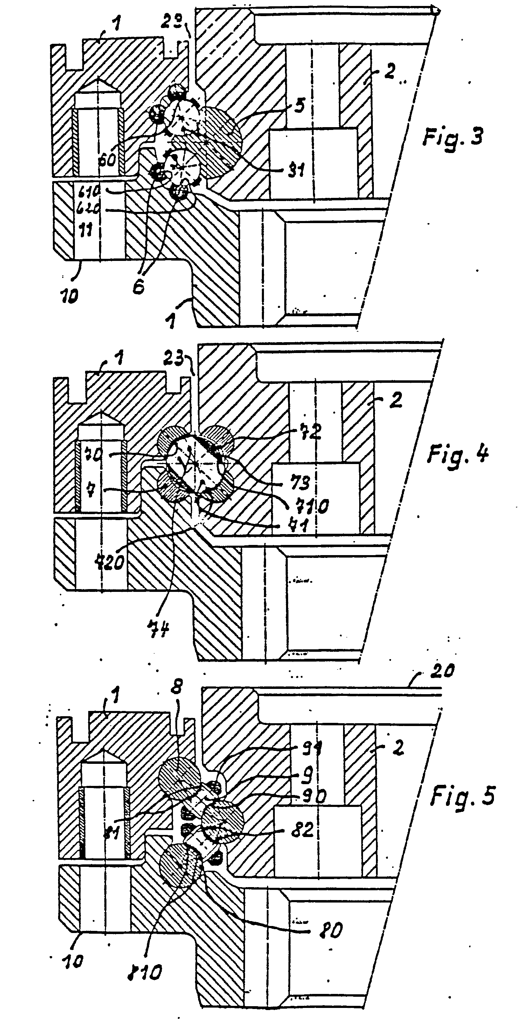

Diese Merkmale der Erfindung sind einzeln für sich, und zwar in einer einzigen Druckschrift, nämlich in der CH-C-555 012 offenbart, jedoch jeweils in einem anderen Zusammenhang: Bei den Beispielen der Fig. 1, 2, 5 und 6 handelt es sich um ein Vierpunktlager, das mittels kreuzweise angeordneten Zylinderrollen mit im Schnitt gesehen geraden Mantelflächen versehen ist; in Fig. 3 ist ein Lager dieser Art beschrieben, das zwar Kontaktstellen zwischen Kugeln und Laufbahnen der Profillaufdrähte mit von der Geraden abweichendem Schnittbild verwendet, das aber kein Vierpunktlager darstellt. Schließlich sind bei dem Ausführungsbeispiel der Fig. 4 beide Konstruktionen in je einer der Laufbahn miteinander kombiniert, wobei in der einen Laufbahn ein Vierpunktlager mittels Zylinderrollen gerader Mantelflächen vorhanden ist, in der anderen jedoch ein Zweipunktlager über Kugeln und von der Geraden abweichenden Kontaktstellen.

Alle diese Lagerausführungen weisen die ihnen typischen Nachteile auf. Allen Figuren ist zu entnehmen, daß diese Lager starr und unnachgiebig sind und die Aufgabe, ein solches Lager in gewissen Grenzen elastisch zu halten, dabei überhaupt nicht angesprochen wurde. Bei allen Beispielen machen zunächst die Käfige der Rollkörper eine relative Bewegung zwischen den Laufringen unmöglich. Die Zylinderrollen mit geraden Mantelflächen sind kreuzweise angeordnet, wobei die Rollen des einen Stützwinkels etwas kürzer sind als die des anderen. Beim Auftreten von Verwindungskräften werden sich die kürzeren Rollen verschieben und zusätzlich zu den Käfigen Verspannungen hervorrufen, die das Lager blockieren. Es wird hierbei zwar ein mehrreihiges Vierpunktlager in beiden Laufbahnen erzielt, dorch ist dieses Lager beispielsweise für Drehtürme von Panzern ungeeignet, weil sich der Drehturm in extremen Situationen nicht mehr drehen läßt.

Ein Vierpunktlager ist aber erforderlich, will man mit drei Profillaufdrähten aus Gewichtsgründen auskommen und hohe Trag- und Stoßlasten bewältigen können. Dies ist eine jedem Fachmann geläufige Erkenntnis, die, in die Praxis so umzusetzen, daß Verspannungen vermieden werden können, bisher noch nicht möglich gewesen ist. Dies zeigen die Ausführungen der Fig. 3 und 4 der genannten Druckschrift, bei denen versucht wurde, mit Kugeln ein solches ringförmiges Profildrahtlager herzustellen. Auch dieses Lager ist in sich absolut starr. Wenn bei diesen Ausführungen die Kontaktstellen zwischen Laufbahnen und Kugeln im Schnitt von der Geraden abweichend ausgebildet sind, dann ausschließlich aus dem Grund, daß dadurch der Flächendruck zwischen ihnen verkleinert werden kann.

Aus diesen Gründen ist auch schon vorgeschlagen worden, die Profillaufdrähte nicht starr in die Laufringe einzubetten, sondern zwischen sie und die Laufringe eine elastische Zwischenlage einzufügen, was zwar eine gewisse Elastizität des Lagers ergibt, was aber den Nachteil mit sich bringt, daß sie einen Resonanzboden bildet, der ein unerwünschtes Schwingen der beiden Laufringe zur Folge hat.

Keiner der Fachleute, auch der Urheber des Profildrahtlagers der CH-C-555 012 nicht, ist zu der Erkenntnis gelangt, daß man durch eine richtige Kombination der von ihm offenbarten Einzelmerkmale ein Vierpunktlager mit mehr Elastizität erreichen kann, wenngleich das Bedürfnis dafür seit Jahrzehnten besteht.

Das durch die Erfindung erstrebte Hauptziel der Elastizität des Profildrahtlagers kann sowohl mit Kugeln wie mit Zylinderrollen als Rollkörper erreicht werden. Bei beiden Ausführungsmöglichkeiten ist es nach einem weiteren Merkmal der Erfindung sinnvoll, daß der zwischen den Abwälzpunkten gebildete Winkel bis zu 90° beträgt. Weitere vorteilhafte Ausbildungen der Erfindung sind in den Ansprüchen 3 bis 8 angegeben.

In diesem Zusammenhang ist es wichtig, darauf hinzuweisen, daß die aus drei Profillaufdrähten bestehenden Lager der CH-C-555 012 sicher nicht zur Gewichtseinsparung des Lagers beitragen. Vergleicht man die Querschnitte zwischen den Profillaufdrähten 12, 13 einerseits mit dem Querschnitt des Profillaufdrahtes 14 der Fig. 3 dieser Patentschrift andererseits, so braucht wohl nicht erst nachgerechnet zu werden, welches Gewicht vier der Profillaufdrähte des Querschnittes der Profillaufdrähte 12, 13 haben würden. Die Anwendung von drei Profillaufdrähten hat demnach bei dem Prinzip dieser Patentschrift nicht die Bedeutung, die ihr zugeschrieben wird.

Beim Gegenstand der Erfindung bekommt diese Konstruktion aber eine Bedeutung, weil der große gegenseitige Umfassungsgrad der Kontaktstellen die Elastizität des Lagers und die Vierpunktlagerung ermöglicht.

Diese Merkmale der Erfindung gehen aus den verschiedenen Ausführungsbeispielen der Erfindung hervor; es zeigen schmematisch:

Fig. 1 ein Dreiprofildrahtlager mit Kugeln als Rollkörper,

Fig. 2 einen vergrößerten Ausschnitt daraus in zwei Extremstellungen des Lagers,

Fig. 3 ein gleiches Lager, jedoch mit fünf Profillaufdrähten,

Fig. 4 ein Vierprofildrahtlager mit Zylinderrollen und

Fig. 5 ein Dreiprofildrahtlager mit Zylinderrollen.

Bei allen Ausführungsformen der Erfindung ist der äußere Laufring 1 zweigeteilt und der innere 2 einteilig, doch sind diese Kriterien nicht erfindungswesentlich. Der äußere Laufring 1 stützt sich mit der Auflagefläche 10 auf dem Fahrgestell eines Fahrzeugs ab und ist mit diesem in nicht dargestellter Weise formschlüssig verbunden. Die Bohrungen 11 sind über den Umfang des Profildrahtlagers verteilt und dienen dazu, die beiden Laufringteile miteinander zu verbinden. Beide Laufringteile 1 weisen zur Aufnahme der Profillaufdrähte je eine zylindrische Aussparung 12 auf. Diese Aussparungen können aber auch u- oder v-förmig sein.

Der innere Laufring 2 ist einstückig und besitzt eine Auflagefläche 20 zur Aufnahme der nicht dargestellten zu schwenkenden Last. Die Bohrungen 21 dienen zur Aufnahme von Befestigungselementen. Bei 21 ist eine Aussparung 22 zur Aufnahme eines Profillaufdrahtes vorgesehen. Mit 23 ist der Spalt bezeichnet, der zwischen den beiden Laufringen 1 und 2 als Bewegungsraum für die beiden Laufringe frei bleibt. Diese Teile stimmen bei allen gezeigten Ausführungsbeispielen der Erfindung überein.

In Fig. 1 ist nun ein Beispiel gezeigt, bei welchem Kugeln 3 als Rollkörper in einem Dreidrahtprofillager vorgesehen sind. Um hierbei ein Vierpunktlager erreichen zu können, sind die beiden Profillaufdrähte 4 so ausgebildet, daß sie eine Laufbahn 40 bilden, die in der Schnittzeichnung kreisförmig erscheint und einen wesentlichen Teil des Umfanges 30 der Kugeln 3 umfaßt. Die Laufbahn 40 und der Kugelumfang bilden die Kontaktstellen beider Teile des Lagers am äußeren Laufring 1. Diese Kontaktstellen 30, 40 sind im Verfolg des Kugelumfanges so lang, daß sie über einen Sektor hinausreichen, der durch einen Winkel begrenzt ist, und zwar so weit, daß der Stützwinkel gleichzeitig Radius 31 für zwei Kreisbögen 41, 42 ist. Beim Ausführungsbeispiel der Fig. 1 bis 3 beträgt er etwa 90°, so daß sich die Kontaktstellen 30, 40 über mehr als ein Drittel des Kugelumfangs erstreckt und die Kreisbögen 41, 42 in der Laufbahnmitte 43 aufeinandertreffen, wo deshalb mit den Kugeln 3 kein Kontakt stattfindet. Die Laufbahn 40 ist also kein exaktes Gegenprofil zu den Kugeln 3, sie bildet aber bei 410 und 420 zwei Punkte des jeweiligen Vierpunktlagers.

Im inneren Laufring 2 ist ein Profillaufdraht 5 eingelassen, der beiden Kugelreihen 3 als Kontaktfläche dient. Er weist zu diesem Zweck zwei Laufbahnen 50 auf, die genau gleich sind und deshalb der Einfachheit halber mit denselben Bezugszeichen versehen wurden. Auch diese Laufbahnen 50 sind wie die Laufbahnen 40 in zwei Hälften 51, 52 aufgeteilt, die die beiden letzten Punkte 510 und 520 der beiden Vierpunktlager bilden.

In Fig. 2 ist nun gezeigt wie sich das Profildrahtlager innerhalb von zwei Extremlagen bewegen kann, ohne daß Spannungen irgendwelcher Art auftreten können. Die Kugeln 3 können sich auf den von der Geraden abweichenden Kontaktstellen 30, 40 einerseits und 30, 50 andererseits abwälzen, so daß die beiden Laufringe gegenseitig eine gewisse Bewegungsfreiheit haben. Daran werden sie auch nicht durch die Käfige 32 gestört, da diese, wie die Fig. 1 erkennen läßt, auch bei Extremlagen frei liegen.

Beim Ausführungsbeispiel nach der Fig. 3 sind alle Teile der beiden ersten Figuren übernommen worden, geändert ist nur, daß der eine Profillaufdraht 4 durch zwei Profillaufdrähte 6 mit den beiden Laufbahnen 60 ersetzt wurde. Sie sind in einem solchen Abstand voneinander angeordnet, daß die Radien 31, die auf die beiden Punkte 610 und 620 der einen Seite der beiden Vierpunkt-Profildrahtlager gerichtet sind, einen Winkel von ca. 90° bilden. Auch dieses Profildrahtlager arbeitet so, wie es in Fig. 2 dargestellt ist.

Die Fig. 4 zeigt ein Vierpunkt-Profildrahtlager, das das Prinzip der Kreuzrollenlager für das Erfindungsprinzip geeignet macht. Bei dieser Ausführungsform der Erfindung werden zur Errreichung zweier Vierpunkt-Profildrahtlager vier Profillaufdrähte 7 mit den Laufbahnen 70 benötigt. Die Zylinder der einen Zylinderrollenreihe sind mit 71, die der anderen, um 180° dazu verdreht angeordneten mit 72 und deren Kontaktstellen mit 720 bezeichnet. Die Käfige 73 werden bei 710 aufgesetzt. Daß es sich hierbei um ein Vierpunkt-Profildrahtlager handelt, braucht nicht näher beschrieben zu werden.

Das Bespiel der Fig. 5 zeigt eine andere Art von Zylinderrollen bei einem Lager nach der Erfindung. Bei dieser Ausführung werden drei Profillaufdrähte 8 mit kreisförmigem Profil 80 verwendet, deren Profil und Querschnitt gleich sind. Zwischen ihnen rollen die beiden Zylinderrollenreihen 9 ab, die mit je einem Käfig 91 versehen sind. Diese Zylinderrollen sind im Winkel von ca. 90° zueinander angeordnet und weisen eine konkav verlaufende Mantellinie 90 auf, die ebenfalls aus zwei Abschnitten besteht, wie sie in Fig. 2 vergrößert dargestellt ist, so daß sie hier nicht näher beschrieben werden muß.

Die gestrichelt eingezeichneten Linien 81 zeigen, daß der Druckwinkel erheblich geringer ist als bei den Profildrahtlagern der Fig. 1 bis 4.

Bei allen den gezeigten fünf Ausführungsbeispielen sind die Grundprinzipien der Erfindung eingehalten: ein doppeltes Vierpunkt-Profildrahtlager, bei dem alle gegenseitigen Kontaktflächen von der Geraden abweichend ausgebildet sind und das bei Extremlagen in den nötigen Grenzen nachgiebig, aber nicht labil ist.

**Patentansprüche**

1. Zweireihiges ringförmiges, als Profildrahtlager ausgebildetes Schrägwälzlager, bestehend aus Innenring (2) und Außenring (1) und mindestens drei darin eingebettete, die Laufbahnen bildende Laufdrähte, (4, 5, 7, 8) zwischen denen Kugeln, Tonnenrollen und/oder Spindelrollen als Wälzkörper (3, 9, 71, 72) angeordnet sind, dadurch gekennzeichnet, daß sich jeder Wälzkörper (3, 9, 71, 72) an wenigstens einem zugehörigen Laufdraht (4, 5, 7, 8) an zwei, mit dem Krümmungsmittelpunkt des Wälzkörpers (3, 9, 71, 72) oder der Laufbahn (81), einen Winkel (Linien 31, 74, 82) einschließenden Punkten (410, 420, 510, 520) abwälzt und daß jeder Wälzkörper (3, 9, 71, 72) auf der entgegengesetzten Seite ebenfalls in zwei Punkten abgestützt ist, so daß in allen Laufbahnen ein Vierpunktlager vorhanden ist.

2. Zweireihiges Profildrahtlager nach Anspruch 1, dadurch gekennzeichnet, daß der zwischen den Abwälzpunkten (410, 420, 510, 520) gebildete Winkel (Linien 31, 74, 82) bis zu 90° beträgt.

3. Zweireihiges Profildrahtlager nach Anspruch 1 oder 2, dadurch gekennzeichnet, daß zwei mit den Wälzkörpern (3) und dem mit zwei Abwälzpunkten ausgebildeten Laufdraht (5) eine Wälzreihe bildende Einzellaufdrähte (6) jeweils mit einem Abwälzpunkt so zueinander angeordnet sind, daß der Winkel ihrer Abwälzpunkte (610, 620) mit dem Krümmungsmittelpunkt der Wälzkörper (3) etwa dem Winkel (Linien 31) der Abwälzpunkte des anderen Laufdrahtes (5) entspricht.

4. Zweireihiges Profildrahtlager nach einem oder mehreren der Ansprüche 1 bis 3, dadurch gekennzeichnet, daß zwischen Außenring (1) und Innenring (2) ein deren gegenseitige Verwindung ermöglichender vergrößerter Spalt (23) vorgesehen ist.

5. Zweireihiges Profildrahtlager nach einem oder mehreren der Ansprüche 1 bis 4, dadurch gekennzeichnet, daß käfiggefaßte Kugeln (3) als Wälzkörper vorgesehen sind, und daß deren Käfige (32) in jeder gegenseitigen Lage vom Außenring (1) und Innenring (2) im Spalt (23) freiliegen.

6. Zweireihiges Profildrahtlager nach einem oder mehreren der Ansprüche 1 bis 5, dadurch gekennzeichnet, daß die im Schnitt gesehene konkave Laufbahn (40, 41) der Profildrähte so eingeschliffen ist, daß sie je zwei Kreisbogenteile (410, 420, 510, 520) bilden, deren Radien in einem Winkel von ca. 90° zueinander stehen.

7. Zweireihiges Profildrahtlager nach einem oder mehreren der Ansprüche 1 bis 6, dadurch gekennzeichnet, daß die Wälzkörper (71, 72) in einem Wälzkreis als kreuzweise angeordnete Tonnen oder Spindelrollen angeordnet sind.

8. Zweireihiges Profildrahtlager nach einem oder mehreren der Ansprüche 1 bis 7, dadurch gekennzeichnet, daß die Wälzachsen der Wälzkörper (3, 9, 71, 72) in einem Winkel von 90° zueinander angeordnet sind.

**Revendications**

1. Palier annulaire à deux rangées de corps de roulement, à chemins de roulement en fil profilé, formé d'une bague interne (2) et d'une bague externe (1) et au moins trois fils de roulement (4, 5, 7, 8) réalisant les chemins de roulement, qui y sont logés, entre lesquels sont disposés des billes, des rouleaux bombés et/ou des rouleaux cylindriques, comme corps de roulement (3, 9, 71, 72), caractérisé en ce que chaque corps de roulement (3, 9, 71, 72) roule sur au moins un fil de roulement (4, 5, 7, 8) correspondant en deux points (410, 420, 510, 520) formant un angle (ligne 31, 74, 82) avec le centre de courbure du corps de roulement (3, 9, 71, 72) ou du chemin de roulement (81), et chaque corps de roulement 3, 9, 71, 72) s'appuie également en deux points du côté opposé, de telle sorte qu'il existe dans tous les chemins de roulement un appui en quatre points.

2. Palier à deux rangées de fils de roulement profilés selon la revendication 1, caractérisé en ce que l'angle (lignes 31, 74, 82) formé entre les points de roulement (410, 420, 510, 520) s'étend jusqu'à 90°.

3. Palier à deux rangées de fils profilés selon la revendication 1 ou 2, caractérisé en ce que deux fils de roulement séparés (6) formant une rangée de roulement avec les corps de roulement (3) et le fil de roulement (5) réalisé avec deux points de roulement, sont disposés, avec un point de roulement, de telle manière l'un par rapport à l'autre que l'angle de leurs points de roulement (610, 620) avec le centre de courbure des corps de roulement (3) correspond sensiblement à l'angle (ligne 31) des points de roulement de l'autre fil de roulement (5).

4. Palier à deux rangées de fils de roulement profilés, selon une ou plusieurs des revendications 1 à 3, caractérisé en ce que l'on prévoit entre la bague de roulement extérieure (1) et le bague de roulement intérieure (2) un jeu (23) élargi permettant leur gauchissement mutuel.

5. Palier selon une ou plusieurs des revendications 1 à 4, caractérisé en ce que l'on prévoit comme corps de roulement des billes (3) disposées dans une cage, et en ce que leurs cages (32) sont disposées librement dans le jeu (23) dans chaque position mutuelle de la bague de roulement externe (1) et de la bague de roulement interne (2).

6. Palier selon une ou plusieurs des revendications 1 à 5, caractérisé en ce que le chemin de roulement (40, 41), concave vu en coupe, des fils profilés, est rodé de telle sorte qu'il présente deux parties d'arc de cercle (410, 420; 510, 520), dont les rayons de trouvent à un angle d'approximativement 90° l'un de l'autre.

7. Palier selon une ou plusieurs des revendications 1 à 6, caractérisé en ce que les corps de roulement (71, 72) sont réalisés sous la forme de rouleaux cylindriques bombés ou de rouleaux cylindriques disposés en croix.

8. Palier selon une ou plusieurs des revendications 1 à 7, caractérisé en ce que les axes des corps de roulement (3, 9, 71, 72) sont disposés à un angle d'approximativement 90° les uns par rapport aux autres.

**Claims**

1. A double-row, annular skew roller bearing in the form of a profiled wire bearing, comprising an inner race (2) and an outer race (1) and at least three race wires (4, 5, 7, 8) which are embedded therein and form the raceways, and between which balls, barrel rollers and/or spindle rollers are disposed as rolling bodies (3, 9, 71, 72), characterised in that each rolling body (3, 9, 71, 72) rolls on at least one associated race wire (4, 5, 7, 8) at two points (410, 420, 510, 520) which subtend an angle (lines 31, 74, 82) with the centre of curvature of the rolling body (3, 9, 71, 72) or the raceway (81), and each rolling body (3, 9, 71, 72) is also supported on the opposite side at two points, so that a four-point bearing is provided in all the raceways.

2. A double-row profiled wire bearing as claimed in claim 1, characterised in that the angle (lines 31, 74, 82) formed between the rolling points (410, 420, 510, 520) is up to 90°.

3. A double-row profiled wire bearing as claimed in claim 1 or 2, characterised in that two single race wires (6), which form a rolling row with the rolling bodies (3) and the race wire (5) formed with two rolling points, are each disposed with a rolling point in such a relation to one another that the angle of their rolling points (610, 620) to the centre of curvature of the rolling bodies (3) corresponds approximately to the angle (lines 31) of the rolling points of the other race wire (5).

4. A double-row profiled wire bearing as claimed in one or more of claims 1 to 3, characterised in that an enlarged gap (23) is provided between the outer race (1) and the inner race (2) which permits mutual torsion thereof.

5. A double-row profiled wire bearing as claimed in one or more of claims 1 to 4, characterised in that caged balls (3) are provided as rolling bodies, and their cages (32) are exposed in the gap (23) in any mutual position of the outer race (1) and inner race (2).

6. A double-row profiled wire bearing as claimed in one or more of claims 1 to 5, characterised in that the concave raceway (40, 41) of the profiled wires, which is seen in section, is ground in such a way that they each form two circular arc parts (410, 420, 510, 520) whose radii are at an angle of approximately 90° to one another.

7. A double-row profiled wire bearing as claimed in one or more of claims 1 to 6, characterised in that the rolling bodies (71, 72) are disposed in a rolling circle as crosswise-disposed barrels or spindle rollers.

8. A double-row profiled wire bearing as claimed in one or more of claims 1 to 7, characterised in that the rolling axes of the rolling bodies (3, 9, 71, 72) are disposed at an angle of 90° to one another.

Fig. 1

23
1
20
21
2
12
3
32
22
4
9
11
40
1
10

Fig. 2

41
43
410
42
510
420
42
420
5
3
31
51
520
53
52
31
50
31
51
3
30
31

EP 0 243 749 B1

Fig. 3

Fig. 4

Fig. 5